# EUROPEAN PATENT APPLICATION

(11) **EP 2 090 343 A1**
(43) Date of publication of application: **19.08.2009**
(21) Application number: 07807321.0
(22) Date of filing: 14.09.2007
(51) Int. Cl.: A63F 13/00

(54) **GAME DEVICE, GAME METHOD, AND GAME PROGRAM**

(30) Priority: 14.11.2006 JP 2006307701
(71) Applicant: Konami Digital Entertainment Co., Ltd., Tokyo 107-8324 (JP)
(72) Inventor: MATSUMOTO, Naoko, Minato-ku Tokyo 107-8324 (JP); MASUDA, Hiroyuki, Minato-ku Tokyo 107-8324 (JP); KONO, Masanori, Minato-ku Tokyo 107-8324 (JP); FUKUDA, Yoshito, Minato-ku Tokyo 107-8324 (JP)
(74) Representative: Driver, Virginia Rozanne
(86) International application number: PCT/JP2007/067914
(87) International publication number: WO 2008/059656

(57) **Abstract**

The present invention provides a game apparatus that comprises: an operation instructing unit **323** that outputs an operation instruction to a player; an operating unit, which is provided with one or a plurality of output regions, that accepts an input operation from the player; an outputting unit, which is provided to the operating unit corresponding to each of the output regions, that outputs one output pattern or any one of a plurality of output patterns to the corresponding output region; a changing unit **325,** which is provided to the operating unit, that changes the output state of the output pattern output by at least one outputting unit in accordance with the game difficulty level; a determining unit **325** that determines an operation result based on the operation instruction and the output pattern output to the output region of the operating unit that accepted the player's input; and a game executing unit **321** that controls the execution of the game based on the determination result of the determining unit.

## Description

### TECHNICAL FIELD

The present invention relates to a technique whereby the execution of a game is controlled in accordance with the game's level of difficulty.

### BACKGROUND ART

A game's difficulty level is generally controlled by a program. For example, music game apparatuses incorporate programs called operation sequences. Based on the given operation sequence, the music game apparatus issues an instruction, on a monitor, regarding the operation members to be operated and the timing with which this instruction is to be carried out. Furthermore, the game apparatus computes a game result by comparing each instruction timing with the timing with which the selected operation member was actually operated.

Instructions are issued regarding operation members and the instruction timing, for example, as follows. Instruction marks, which correspond to the operation members, are scrolled on a monitor screen toward a timing line, and the instruction mark of a certain operation member is made to coincide with the timing line. The greater the number of changes between operation members and the greater the complexity of the operation timing instructed based on the operation sequence, the higher the game's difficulty level.

In addition, in the case of, for example, a throwing game, the game's difficulty level is generally controlled by using a program to control, for example, a target movement speed, a target size, a target number, and the tolerance of a success determination.

### DISCLOSURE OF INVENTION

As discussed above, the operation sequence in a music game defines operation members and an instruction timing. Each such operation sequence is created to suit, for example, the rhythm, tempo, length, and melody of each musical performance. Accordingly, every time a musical performance changes or the number of musical performances increases, the creator is burdened with creating new operation sequences. In addition, in cases where operation sequences are created for each musical performance such that they correspond to a plurality of game difficulty levels, the number of operation sequences needed is even greater. For example, to enable a game to have *N* game difficulty levels for each of *M* musical performances, the creator must create, one by one, a total of *M* × *N* combinations of operation sequences. This increasingly adds to the burden of the creator. Moreover, the contemporariness of the songs played is part of a music game's attraction, and therefore, players of every skill level persistently demand changes in the selection of compositions available for playing. This demand is one factor that makes eliminating the burden on the creator to create operation sequences very difficult.

In addition, in the case of other games, for example, a throwing game, the creator is burdened with creating game programs wherein, for example, the target movement speed, size, and number differ, and then for each such game program, creating additional game programs in accordance with the number of game difficulty levels.

Accordingly, an object of the present invention is to provide a technique that can facilitate the control of game difficulty levels.

To solve the abovementioned problems, a first aspect of the invention provides a game apparatus that executes a game with a difficulty level, comprising: an operation instructing unit that outputs an operation instruction to a player; an operating unit, which is provided with one or a plurality of output regions, that accepts an input operation from the player; an outputting unit, which is provided to the operating unit so as to correspond to each of the output regions, that outputs one output pattern or any one of a plurality of output patterns to the corresponding output region; a changing unit, which is provided to the operating unit, that changes the output state of the output pattern output by at least one outputting unit in accordance with the game difficulty level; a determining unit that determines an operation result based on the operation instruction and the output pattern output to the output region of the operating unit that accepted the player's input; and a game executing unit that controls the execution of the game based on the determination result of the determining unit.

An example of a game to which the present invention can be applied is a flag waving game wherein a colored flag that is the same color designated by the operation instruction is waved. In the flag waving game, a flag waving pole that mimics a flag would be used as the operating unit of the present invention. In addition, the flag waving pole is provided with a light emitting part that emits a colored light and is equivalent to the output region of the present invention that displays the output pattern. The output pattern is displayed by being output to each output region such that the player can visually ascertain the operating unit to be operated; examples of the output pattern include, for example, a color, a design, a character, a symbol, and any combination thereof. In addition, an output pattern may be, for example, brightness or a color's shade. In the present invention, the output state of the output pattern output to the output region of the operating unit is changed in accordance with the game difficulty level every time a prescribed timing elapses. The changing of the output state of the output pattern includes the case wherein the output pattern changes, for example, from red to blue and the case wherein the output of the output pattern switches between ON and OFF. When some operation instruction is output from the operation instructing unit, the player performs an operation by selecting the operating unit that has the corresponding output region. According to the present invention, because the output state of the output pattern of the output region is changed, the player can respond to the operation instruction while noting the change in the output state.

According to the present invention, the difficulty of the input operation, and in turn the difficulty level of the game, is controlled by changing the output state of the output pattern in the output region as discussed above. Accordingly, according to the present invention, the game difficulty level can be controlled without changing a program; thereby the time needed to change the program as well as the burden on the program creator can be reduced. In addition, the game difficulty level can be controlled not only by changing the program but also by changing the output state of the output pattern in the output region; consequently, the number of variations available for setting the game difficulty level can be increased. In addition, because the output state of the output pattern in the operating unit, which is directly operated by the player, can be changed, the player can be presented with new attractions that are otherwise unobtainable by changing the program. For example, if the output state of the output pattern were to be changed, then it would be pointless to memorize the relationship between the operating unit and the output state of the output pattern at each operating unit; consequently, it is possible to introduce new interest to the game, such as testing the player's reflexes rather than the player's memory.

A second aspect of the invention provides a game apparatus according to the first aspect, wherein the output pattern is at least one pattern selected from a plurality of patterns of color, design, character, symbol, and any combination thereof.

Examples include changing the red color output to the output region to a blue color, and changing the banana design to a strawberry design.

A third aspect of the invention provides a game apparatus according to the first or second aspects, wherein the changing unit, in accordance with the game difficulty level, changes the number of types of output patterns output to the outputting unit.

The game difficulty level can be controlled by changing the number of types of output patterns, such as the number of types of colors or designs output to the output region. For example, let us assume that the number of types of output patterns output to one operating unit in the flag waving game is changed from a two-color display to a three-color display. In such a case, the number of types of colors and the number of types of designs would increase and, in turn, finding the output region that corresponded to the operation instruction would become more difficult; thereby, the difficulty level of the game would also increase.

A fourth aspect of the invention provides a game apparatus according to any one aspect of the first through third aspects, wherein the changing unit controls a time interval for changing the output state of the output pattern in accordance with the game difficulty level.

If the time interval between changes in the output state of the output pattern were to lengthen, then the time period during which the output state of the output pattern does not change would also lengthen. Accordingly, the player would get used to the input operation of the operating unit, which would reduce the game difficulty level. However, if the time interval between changes in the output state of the output pattern were to shorten, then the output state of the output pattern would continually change. Accordingly, the player would have to operate the operating unit in accordance with an output state of an output pattern that would always be new, and therefore the game difficulty level would increase.

A fifth aspect of the invention provides a game apparatus according to any one aspect of the first through fourth aspects, wherein a plurality of the outputting unit is provided to the operating unit; each of the outputting unit comprises a plurality of light emitting unit that have different luminous colors; and the changing unit changes either the luminous colors or the ON/OFF states of the light emitting unit.

For example, one outputting unit comprises three colored lamps and is built into a rod shaped operating unit. The output state of the output pattern output to the operating unit is changed by randomly switching, during the game, the light emitting states of the light emitting lamps. The light emitting state is changed by changing the luminous color and by switching the light emitting unit ON and OFF. Accordingly, the player must operate the operating unit while continually noting their light emitting states, and therefore the game difficulty level increases. In addition, if the light emitting state of the operating unit were continually changed, it would be possible to introduce new interest to the game, such as testing the player's reflexes.

Furthermore, a plurality of the operating unit may be provided, and the light emitting state of the outputting unit built into each operating unit may be changed. In this case, the player would perform the input operation by waving the operating unit that includes the color contained in the instruction. Thus, in the event that there is a plurality of operating unit, the player must continually ascertain which operating unit includes the color; this increases the game's difficulty level, the game's interest, and the like.

A sixth aspect of the invention provides a gaming method that executes a game with a difficulty level and comprises: an operation instructing step that outputs an operation instruction to a player; an accepting step that accepts an operation from the player via an operating unit that is provided with one or a plurality of output regions; an outputting step that outputs one output pattern or any one of a plurality of output patterns to each output region; a changing step that changes the output state of the output pattern in at least one output region in accordance with the game difficulty level; a determining step that determines an operation result based on the operation instruction and the output pattern output to the output region of the operating unit that accepted the player's input; and a game executing step that controls the execution of the game based on the determination result. The present invention exhibits operational effects like those exhibited in the first aspect of the invention.

A seventh aspect of the invention provides a game program that is executed by a computer, which performs a game with a difficulty level, and that causes the computer to function as: an operation instructing unit that outputs an operation instruction to a player; an operating unit, which is provided with one or a plurality of output regions, that accepts an input operation from the player; an outputting unit, which is provided to the operating unit corresponding to each of the output regions, that outputs one output pattern or any one of a plurality of output patterns to the corresponding output region; a changing unit, which is provided to the operating unit, that changes the output state of the output pattern output by at least one outputting unit in accordance with the game difficulty level; a determining unit that determines an operation result based on the operation instruction and the output pattern output to the output region of the operating unit that accepted the player's input; and a game executing unit that controls the execution of the game based on the determination result of the determining unit. The present invention exhibits operational effects like those exhibited in the first aspect of the invention.

The present invention can provide a technique whereby a game's difficulty level can be easily controlled.

### BRIEF DESCRIPTION OF DRAWINGS

**FIG. 1** is an explanatory diagram that shows the entire configuration of a game system according to a first embodiment of the present invention.
**FIG. 2** is one example of the configuration of a game terminal **200.**
**FIG. 3** is an external oblique view of one embodiment of the game terminal **200.**
**FIG. 4(a)** is an external enlarged view of an operation bar **212;** and **FIG. 4(b)** is an enlarged view that shows the interior of a light emitting part of the operation bar.
**FIG. 5(a)** is one example (part 1) of a game screen that is displayed on a monitor **206;**
**FIG. 5(b)** is one example (part 2) of the game screen that is displayed on the monitor **206;** and **FIG. 5(c)** is one example (part 3) of the game screen that is displayed on the monitor **206.**
**FIG. 6** is a conceptual explanatory diagram of personal data.
**FIG. 7** is an explanatory diagram that shows the functional configuration of the game terminal **200.**
**FIG. 8** is one example of operation sequence data that are stored in an operation sequence data table **231**
**FIG. 9** is an explanatory diagram that shows one example of a difficulty level value table that is stored in a difficulty level value table **332.**
**FIG. 10** is an explanatory diagram that shows one example of an I/O pattern table.
**FIG. 11** is an explanatory diagram that shows one example of an I/O pattern table.
**FIG. 12** is one example of a difficulty level selection screen.
**FIG. 13** is a correspondence table that shows the correspondence between difficulty level values and player past game results.
**FIG. 14(a)** is a schematic diagram (part 1) that shows an aspect wherein output states of the operation bar are set; and **FIG. 14(b)** is a schematic diagram (part 2) that shows an aspect wherein output states of the operation bar are set.
**FIG. 15** is a flow chart that shows one example of the flow of the process performed by the game terminal **200.**
**FIG. 16** is an operation sequence data table wherein a change flag is set.
**FIG. 17** is an explanatory diagram that shows an aspect wherein the output states of operation bars change every time a prescribed time interval elapses.
**FIG. 18** is a flow chart that shows one example of the flow of the process performed by the game terminal **200.**
**FIG. 19** is a correspondence table that shows the correspondence between an operation sequence ID, the time interval, the difficulty level value, and the game difficulty level.
**FIG. 20** is an operation sequence data table wherein a change flag is set.
**FIG. 21** is an explanatory diagram that shows an aspect wherein the output states of operation bars change in accordance with the game difficulty level every time a time interval elapses.
**FIG. 22** shows an output state table of the operation bar **212** that is stored in a ROM **103.**
**FIG. 23** is an explanatory diagram that shows an aspect wherein the output states of the operation bars change in accordance with the game difficulty level every time a time interval elapses.
**FIG. 24(a)** is an external enlarged view of a modified example of the operation bar **212;** and **FIG. 24(b)** is an enlarged view that shows the interior of the light emitting part of the operation bar in **FIG. 24(a)****.**
**FIG. 25(a)** is an external enlarged view of another modified example of the operation bar **212;** and **FIG. 25(b)** is an enlarged view that shows the interior of the light emitting part of the operation bar in **FIG. 25(a)****.**

### EXPLANATION OF REFERENCE

- **100**: Center server
- **101**: CPU
- **102**: RAM
- **103**: ROM
- **104**: Data storage
- **200**: Game terminal
- **211**: Operation bar
- **300a-300c**: Output regions
- **302a**: LED

### BEST MODE FOR CARRYING OUT THE INVENTION

### <First Embodiment>

### (1) Configuration of a Game System According to the Present Embodiment

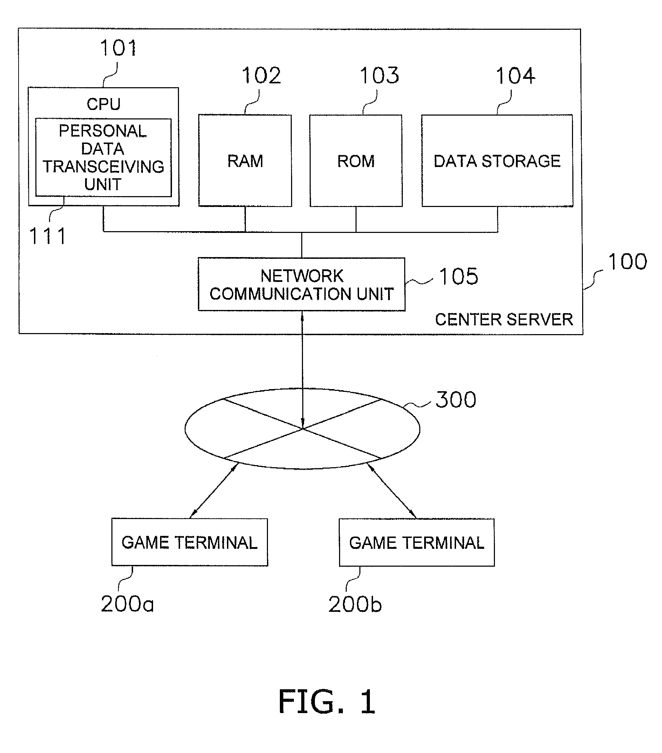

**FIG. 1** is an explanatory diagram that shows the entire configuration of the game system according to the first embodiment of the present invention. This game system comprises a center server **100** and a plurality of game terminals **200a, 200b,....** The game terminals **200** are connected to the center server **100** via a network **300** such as the Internet.

### (1-1) Center Server

The center server **100** receives and stores the personal data of every player from the game terminals **200.** In addition, in response to requests from the game terminals **200,** the center server **100** transmits personal data to the requesters. The center server **100** comprises the following elements (a)-(e):
(a) CPU **101:** implements a plurality of functions, which are discussed later, based on, for example, a control program that is stored in a ROM **103** or a RAM **102.**
(b) RAM **102:** temporarily stores, for example, the control program and personal data.
(c) ROM **103:** stores, for example, the control program.
(d) Data storage **104:** accumulates personal data that are transmitted from the game terminals **200** for every player. Personal data contain, for example, authentication information that includes a player ID and a password. The personal data will be discussed later in detail.
(e) Network communication unit **105:** sends data to and receives data from the game terminals **200** via the network **300.**

### (1-2) Game Terminal

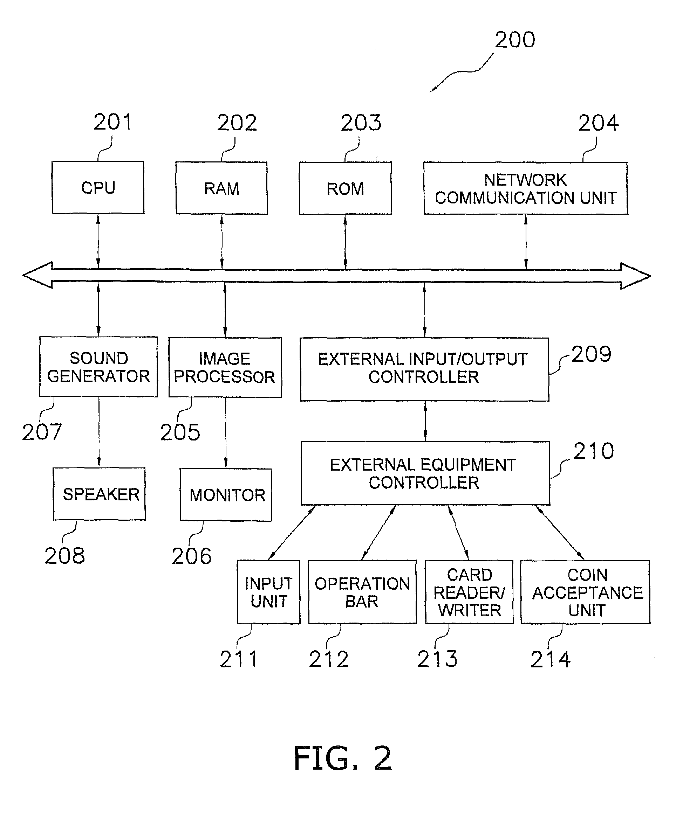

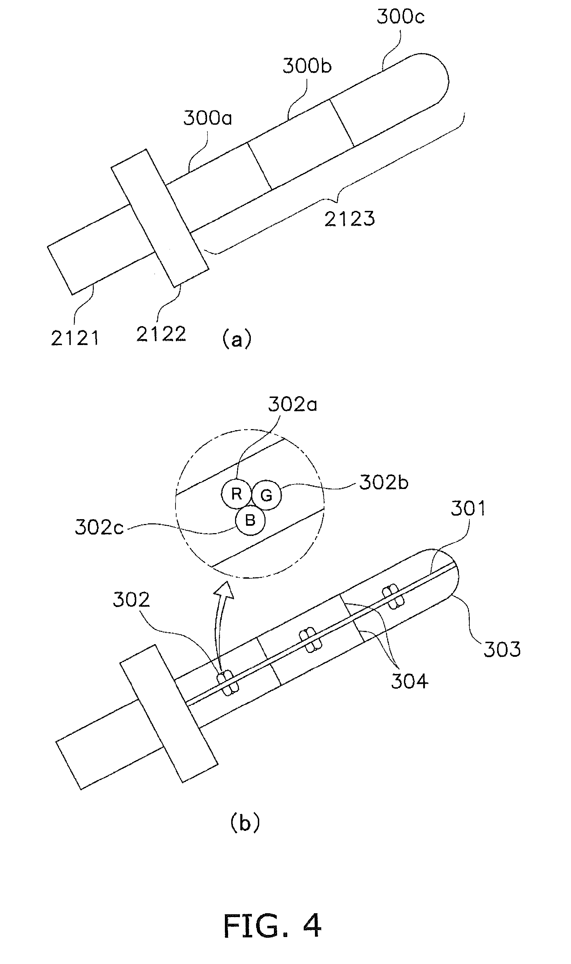

**FIG. 2** shows one example of the configuration of one of the game terminals **200.** The game terminal **200** comprises the elements (a)-(n) listed below.
(a) CPU **201:** implements a plurality of functions (discussed later) based on, for example, a control program and game data that are stored in a ROM **203** (discussed later).
(b) RAM **202:** temporarily stores various game data such as various types of variables and parameters.
(c) ROM **203:** stores, for example, the control program and various parameters.
(d) Network communication unit **204:** sends data to and receives data from the center server **100** via the network **300.**
(e) Monitor **206:** displays, for example, game images during a game, results of each game parameter in a game, a character before and after a game, and the like.
(f) Image processor **205:** generates image data that are displayed on the monitor **206.**
(g) Speaker **208:** during game execution, outputs sounds, such as sound effects, when displaying a demo screen, game results, and the like.
(h) Sound generator **207:** generates sound data to be output to the speaker **208.**
(i) Input unit **211:** includes various buttons, such as a start button and buttons that set the number of players (e.g., one player, two players, etc.).
(j) Operation bars **212:** accept the input operation of a player in response to an operation instruction. In the present embodiment, the operation bars **212** comprise two operation bars **212a, 212b.** A prescribed output pattern is output from output regions **300a, 300b, 300c** of each of the operation bars **212** (refer to **FIG. 4****,** which is discussed below). When the output patterns are output in accordance with an operation instruction, the player performs an input operation in which he or she waves the operation bar **212.**
(k) Card reader/writer **213:** reads a card ID from an inserted magnetic card. As needed, a process may be performed that writes, for example, the player ID and the game result to the inserted card.
(l) Coin acceptance unit **214:** accepts credit based on inserted coins.
(m) External equipment controller **210:** controls external equipment, such as the input units **211,** the operation bars **212,** the card reader/writer **213,** and the coin acceptance units **214.**
(n) External input/output controller **209:** generates control signals for external equipment, such as the input units **211,** the operation bars **212,** the card reader/writer **213,** and the coin acceptance units **214.** In addition, it also receives detection signals from the external equipment and transmits such to the CPU **201.**

### (2) One Example of the Game Terminal

### (2-1) Configuration of the Game Terminal

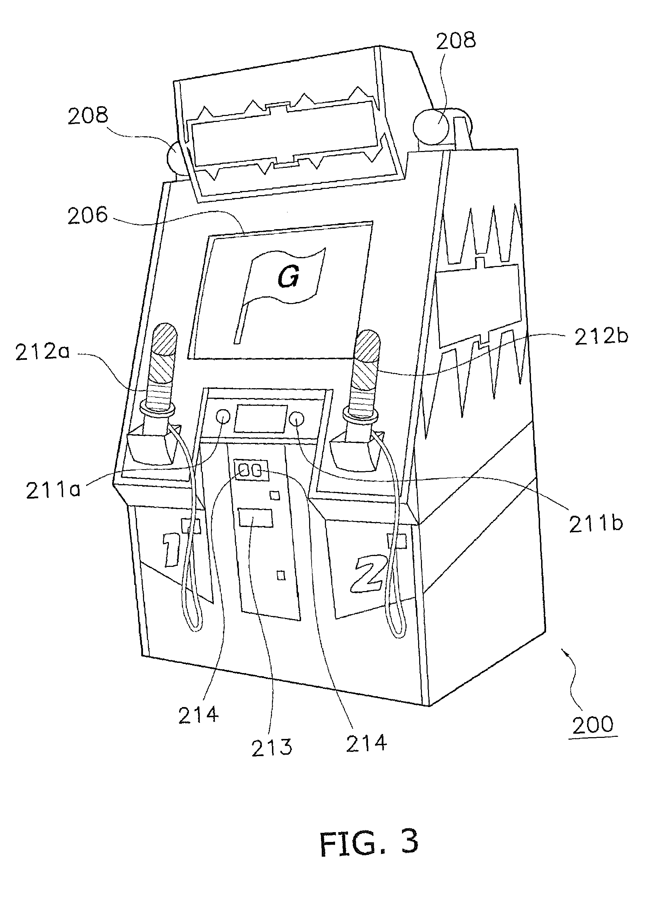

**FIG. 3** is an external oblique view of one embodiment of the game terminal **200.** In the game terminal, the monitor **206** is provided to the front surface of a cabinet. In addition, input units **211a, 211b,** such as start buttons, are laterally provided below the monitor **206,** and two coin acceptance units **214** are laterally provided below the input units **211a, 211b.** Furthermore, the card reader/writer **213** is provided below the coin acceptance units **214.** In addition, the operation bars **212a, 212b,** upon which the player performs input operations, are mounted on the lower left and right sides of the monitor **206.** Furthermore, the speakers **208,** which output performance effects for the song being played, are provided and disposed at the upper part of the casing of the monitor **206.**

**FIG. 4(a)** is an external enlarged view of the operation bar **212,** and **FIG. 4(b)** is an enlarged view that shows the interior of a light emitting part of the operation bar **212**. The operation bar **212** comprises a grasping part **2121,** a slip preventing part **2122,** and a light emitting part **2123.** The grasping part **2121** is a portion by which the player grasps the operation bar **212,** and the slip preventing part **2122** is a portion for ensuring that the player's hand does not slip. The light emitting part **2123** comprises a board **301,** LEDs (light emitting diodes) **302,** a cover **303,** and partition plates **304.** In addition, the light emitting part **2123** is divided into three output regions, namely, the first through third output regions **300a-300c.** Each of the LEDs **302** comprises LEDs of three colors, namely, LEDs **302a, 302b, 303c** furthermore, the LEDs **302** are provided on the front and rear surfaces of the board **301** in each of the three output regions **300.** The LEDs **302a, 302b, 303c** are, for example, a red LED, a green LED, and a blue LED, respectively. By creating combinations of the ON and OFF output states of the LEDs **302a, 302b, 302c,** different colors are output to each of the output regions **300.** For example, the luminous colors red, green, or blue of the LEDs **302a, 302b, 302c** may be output or they may not be output, as in the OFF state. In the present embodiment, each of the LEDs **302** generates three output patterns, namely, "*R* (red)," "*G* (green)," and "*B* (blue)," that are output from each of the output regions **300.** Here, the output pattern, which can be colors such as "*R*," "*G*," and "*B*," is a display that is output to each of the output regions **300** such that the player can visually ascertain the operation bar **212** to be operated. Furthermore, the output pattern may be any display that is output to each of the output regions **300** such that the player can visually ascertain the operation bar **212** to be operated; for example, the output pattern may be a design, a character, a symbol, or any combination thereof. In addition, it may be, for example, an attribute such as brightness or a color's shade. Furthermore, the number of the output regions **300** and the number of the LEDs **302** is not limited to those mentioned above. In addition, the members that output the luminous colors are not limited to the LEDs **302,** and may be, for example, cold cathode lamps. The partition plates **304** isolate the output regions **300** from one another so that the luminous colors from the output regions **300** do not blend. The cover **303** comprises a transparent member and transmits the luminous colors from the output regions **300** to the exterior as well as protects the interior of the light emitting part **2123.**

### (2-2) Game Execution

The game terminal **200** configured as described above executes a game as follows in accordance with the control program stored in the ROM **203.** A player inserts his or her magnetic card into the card reader/writer **213** of the game terminal **200** and inserts a coin in one of the coin acceptance units **214.** The game terminal **200** reads the card ID, which identifies the card, from the magnetic card that was inserted into the card reader/writer **213** and requests the player to input a password. The input password is compared with the data in the center server **110** and the individual is thereby authenticated. When the game terminal **200** accepts a game start instruction from an authenticated player, the CPU **201** executes the control program, and thereby the game starts. The game result is calculated based on the execution of the game.

### (2-3) Overview of the Game

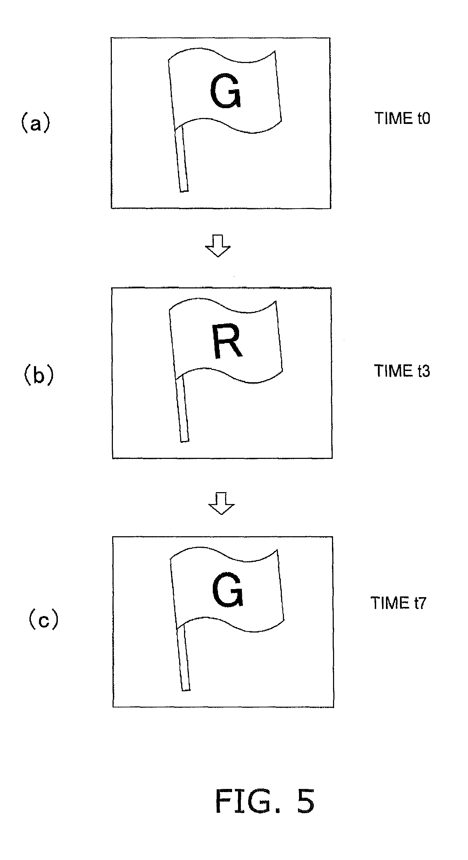

The following text provides an overview of the game executed by the game terminal **200,** referencing **FIG. 5****.**

**FIGs. 5(a)****-(c)** are examples of game screens that are displayed on the monitor **206** and show an aspect wherein the operation instruction changes together with the time. First, the game terminal **200** sets the game difficulty level either by accepting the game difficulty level from the player or based on the player's past game results. The game difficulty level is an index of the difficulty of the game and, for example, as discussed below, is expressed by a difficulty level value between 1 and 99. Next, a set of operation sequence data is selected in accordance with the game difficulty level that was set. The set of operation sequence data constitute a program that defines which operation bar **212** is to be operated and with which operation timing. As shown in **FIG. 3** and **FIG. 5**, operation instructions, such as "*R*," "*G*," and "*B*," are successively output to the monitor **206** in accordance with an operation sequence. The player operates the operation bar **212** whereto the luminous color corresponding to the operation instruction is output.

The CPU **201** detects the operation timing of each of the operation bars **212** by receiving sensor signals from, for example, acceleration sensors that are built into each of the operation bars **212.** Furthermore, the CPU **201** determines a game result for the player based on, for example, whether the operation bar **212** was operated in accordance with the operation instruction, the time elapsed between the outputting of the operation instruction and the performance of the operation, and the like.

### (3) Functional Configuration of Center Server and Game Terminal

### (3-1) Functional Configuration of Center Server

A personal data transceiving unit **111** in the CPU **101** of the center server **100** shown in **FIG. 1** will now be explained.

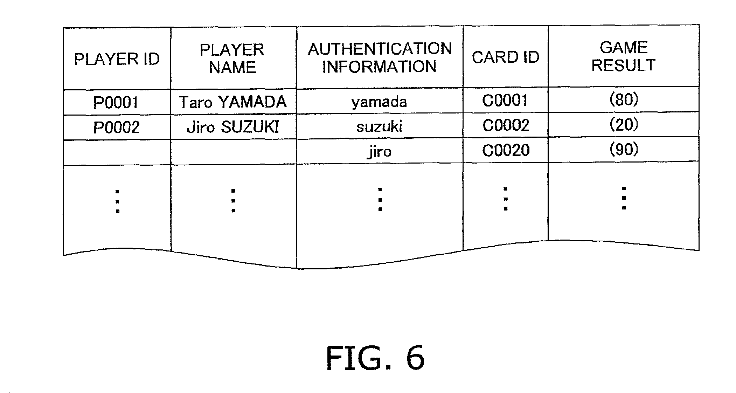

**FIG. 6** is a conceptual explanatory diagram of personal data. The personal data are collected (refer to **FIG. 1****)** by the CPU **101** of the center server **100,** which functions as the personal data transceiving unit **111,** and are accumulated in the data storage **104.**

In the present example, the personal data are structured such that each record contains a "player ID," a "player name," "authentication information," a "card ID," and a "game result." The "player ID" is identification information that identifies the player. The "player name" is the name of the player. The "authentication information" is, for example, a password or a password number that is used to authenticate the player. The "card ID" is identification information that identifies a card owned by the player. Furthermore, a card ID is recorded on each card. The "game result" indicates the cumulative value of the results of games played by the player in the past.

The personal data transceiving unit **111** receives the personal data discussed above from each of the game terminals **200** and updates the data storage **104.** For example, if the personal data transceiving unit **111** receives a player ID and a game result from one of the game terminals **200,** the cumulative value of the game results corresponding to that player ID is updated.

In addition, in response to a request from one of the game terminals **200,** the personal data transceiving unit **111** transmits to the game terminal **200** of the requester the personal data associated with the player ID included in the request.

### (3-2) Functional Configuration of the Game Terminal

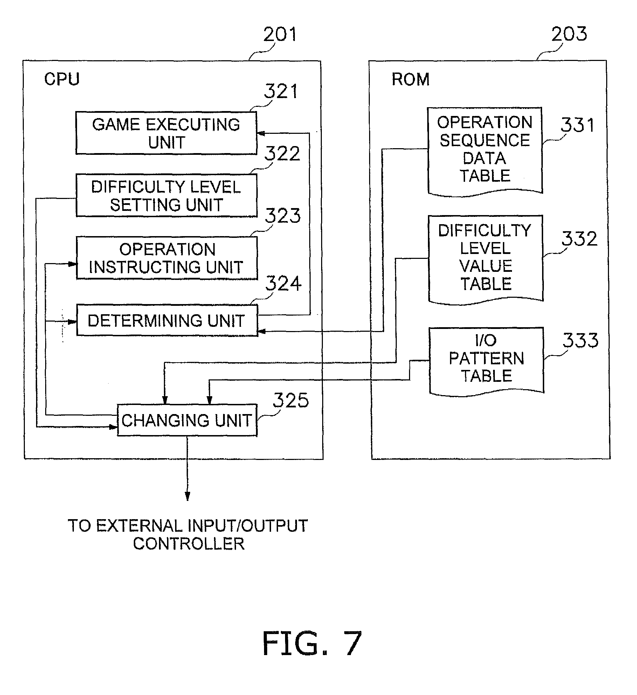

**FIG.** 7 is an explanatory diagram that shows the functional configuration of each of the game terminals **200.** The CPU **201** of the game terminal **200** comprises a game executing unit **321,** a difficulty level setting unit **322,** an operation instructing unit **323,** a determining unit **324,** and a changing unit **325.** The ROM **203** of the game terminal **200** stores an operation sequence data table **331,** a difficulty level value table **332,** and an I/O pattern table **333.** Based on these unit and tables, the CPU **201** of the game terminal **200** executes the game and calculates the game result, which it displays on the monitor **206.**

### (3-2-1) ROM

### <Operation Sequence Data Table>

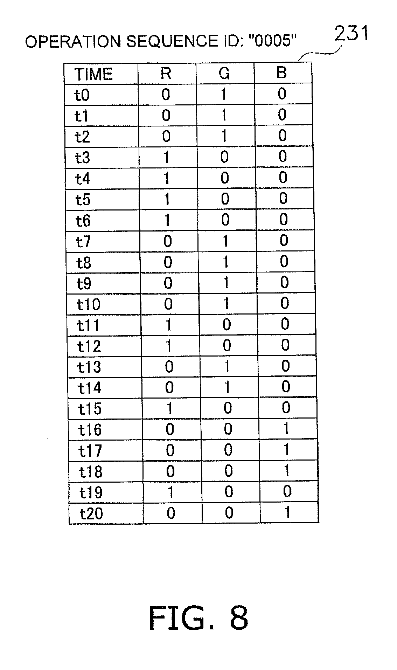

**FIG. 8** shows one example of the operation sequence data that are stored in the operation sequence data table **331.** The operation sequence data define which operation bars **212** are to be operated and with which operation timings. Specifically, the operation sequence data associatively store an "R" flag, a "G" flag, a "B" flag, and a "time." For each flag, "1" indicates ON and "0" indicates OFF. At times *t0-t2*, the "*G*" flag is ON, and therefore a "*G*" operation instruction is output to the monitor **206**, as shown in **FIG. 3** and **FIG. 5(a)****.**

Here, each of the output regions **300** of the operation bars **212** either outputs one of the output patterns, namely, "*R*," "*G*," or "*B*," or is OFF. If a "*G*" operation instruction is output, then the player selects the operation bar **212** that is included in the "*G*" operation instruction and performs an input operation, such as waving the selected operation bar **212.**

### <Difficulty Level Value Table>

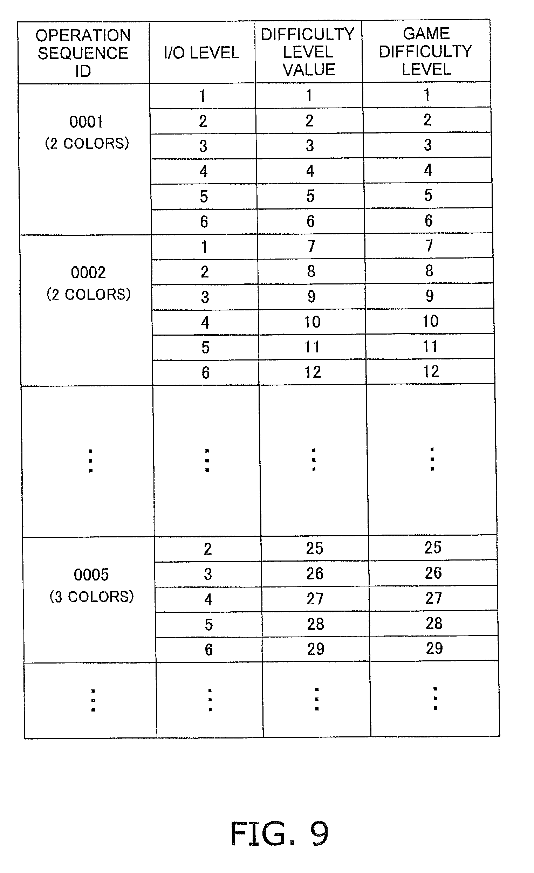

**FIG. 9** is an explanatory diagram that shows one example of the difficulty level value table that is stored in the difficulty level value table **332.** The difficulty level value table **332** associatively stores an operation sequence ID, an I/O level, the difficulty level value, and the game difficulty level. The operation sequence ID is an identifier that identifies the operation sequence data. The I/O (input/output) level is an index that indicates the difficulty of operating the operation bar **212** and corresponds to the combination and the layout of the output patterns in the output regions **300** of the operation bars **212.** I/O levels of different difficulty level values are set for each operation sequence data record. In addition, each difficulty level value is indicated by a value between 1 and 99, and the game difficulty level is set corresponding to the magnitude of the difficulty level value. Thus, in the present invention, a plurality of game difficulty levels can be set for one set of operation sequence data.

### <I/O Pattern Table>

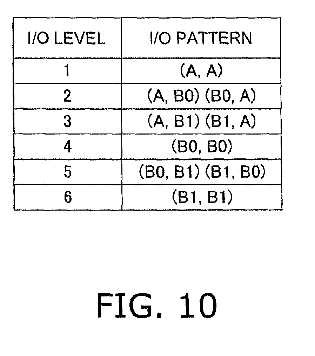

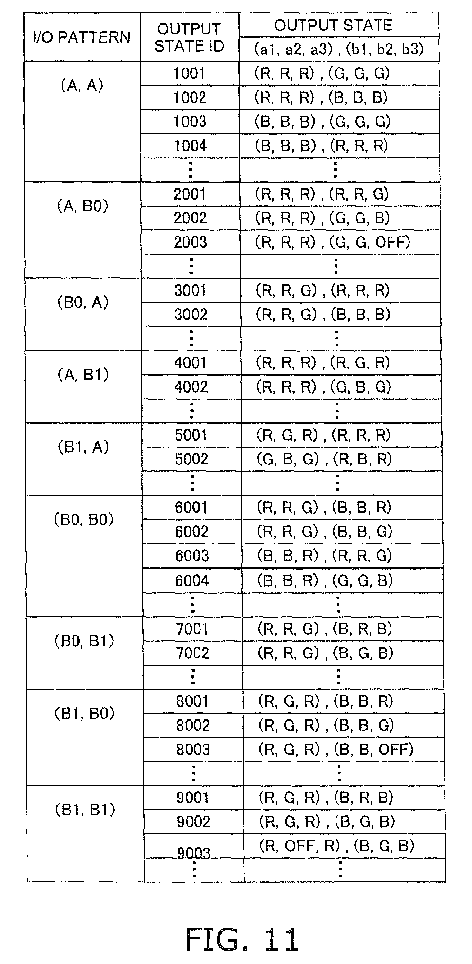

**FIG. 10** and **FIG. 11** are explanatory diagrams that show one example of an I/O pattern table. In **FIG. 10****,** the I/O level and an I/O pattern are associated with one another. In **FIG. 11****,** the I/O pattern, an output state ID, and an output state thereof are associated with one another. For the sake of simplicity, in **FIG. 11** the first through third output regions **300a-300c** of the operation bar **212a** are designated as **a1, a2, a3,** respectively, and the first through third output regions **300a-300c** of the operation bar **212b** are designated as **b1, b2, b3,** respectively.

Here, the output states indicate what is output to each of the output regions **300** of the operation bar **212a** and each of the output regions **300** of the operation bar **212b.** In the present embodiment, there are four output states, including the three cases wherein one of the three output patterns is output-namely, the "*R*" (red), the "*G*" (green), and the "*B*" (blue) colors produced by the three-color LEDs **302**-and the one case wherein all of the LEDs are OFF. In addition, the I/O patterns are categories that systematically categorize the combination and the layout of the various output states in the operation bars **212a, 212b.** Furthermore, each of these categories hierarchically defines the operation difficulty of the operation bars **212** and is set by the I/O level. In the present embodiment, the output state in each of the output regions **300a-300c** is categorized into, for example, as shown in **FIG. 10****,** nine types of I/O patterns = (*A*, *A*), *(A*, *B0*), (*B0*, *A*), (*A*, *B1*), (*B1*, *A*), (*B0*, *B0*), (*B0*, *B1*), (*B1*, *B0*), (*B1*, *B1*), wherein the first term in each pair corresponds to the operation bar **212a** and the second term in each pair corresponds to the operation bar **212b.** In addition, as shown in **FIG. 11**, each I/O pattern includes a plurality of output states. Here, A indicates the case wherein the three output regions **300a-300c** of one of the operation bars **212** outputs the same output pattern. *B0* and *B1* indicate the case wherein two output regions of the output regions **300a-300c** of one of the operation bars **212** output the same output pattern. In particular, *B0* indicates the case wherein the same output patterns are disposed adjacently, and *B1* indicates the case wherein the same output patterns are not disposed adjacently. For example, (*B1*, *A*) indicates that the output patterns of two nonadjacent output regions in the operation bar **212a** are the same and that the output patterns of all three output regions in the operation bar **212b** are the same.

Each of the I/O patterns discussed above is associated with an I/O level that corresponds to the difficulty of operating the relevant operation bar **212.** The I/O level in the present embodiment is set based on the number of types of output patterns included in each operation bar **212** and the layout thereof. With *A*, the number of types of output patterns is 1; with *B0* and *B1*, the number of types of output patterns is 2; therefore, the difficulty level of *A*, which has a greater number of types of output patterns than either *B0* or *B1*, is high. This is because the greater the number of types of output patterns-for example, the greater the number of types of colors-the more difficult it becomes to find the output region outputting the output pattern that accords with the operation instruction. Specifically, in the case of *A*, all output patterns in one of the operation bars **212** are the same, and consequently it is easy to confirm which output patterns are included in the operation bar **212.** Accordingly, the I/O level of *A* is low. In the case of *B0*, the output patterns at two adjacent output regions are the same, but the player must confirm two output patterns in the same operation bar **212.** Accordingly, the I/O level of *B0* is higher than that of *A*. Furthermore, in the case of *B1*, the same output patterns are output, but not adjacently, and consequently, compared with *B0*, it is more difficult to confirm the two output patterns. Accordingly, the I/O level of *B1* is higher than that of *B0*. The nine types of I/O patterns and the I/O levels are associated with one another, as shown in **FIG. 10****,** based on these criteria. Furthermore, the abovementioned criteria are strictly one example, and the I/O levels may be determined based on other criteria.

### (3-2-2) Functions of the CPU

### <Game Executing Unit>

Prior to the execution of the game, the game executing unit **321** downloads personal data from the center server 100. The downloaded personal data include the player's past game results.

In addition, the game executing unit **321** calculates the player's game results based on the execution of the game. Specifically, it receives a determination result from the determining unit **324** and calculates the game result based on the determination result. Furthermore, if a game is executed over a plurality of stages, then the game executing unit **321** may calculate the cumulative value of the game result values for every stage after the plurality of stages is complete. The game executing unit **321** displays the game result on the monitor **206.**

### <Difficulty Level Setting Unit>

The difficulty level setting unit **322** sets the game difficulty level either by accepting the game difficulty level from the player or based on the player's past game results. A method of setting the game difficulty level in each of these cases is explained below.

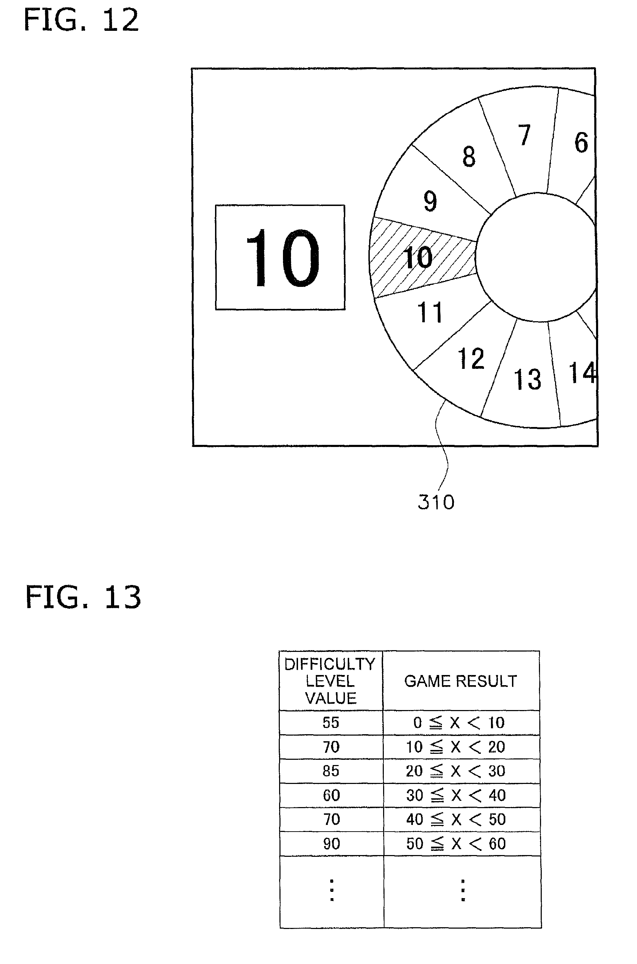

**FIG. 12** shows one example of a difficulty level selection screen. The difficulty level setting unit **322** displays the difficulty level selection screen shown in **FIG. 12** on the monitor **206.** The game difficulty levels are displayed in order in a ring shaped table **310.** The player scrolls the ring shaped table **310** by operating the input unit **211** and presses the singular set button of the input unit **211** when the desired game difficulty level is reached. As such, the difficulty level setting unit **322** accepts the game difficulty level from the player. In **FIG. 12****,** the game difficulty level "10" is selected and displayed enlarged.

**FIG. 13** is a correspondence table that shows the correspondence between the difficulty level value and the player past game result. First, the difficulty level setting unit **322** reads the past game results of every player from the data storage **104.** Furthermore, the difficulty level value corresponding to the past game result is extracted from the correspondence table in **FIG. 13****.** Next, referencing **FIG. 9****,** the game difficulty level is set based on the extracted difficulty level value. The difficulty level setting unit **322** thereby sets the game difficulty level in accordance with the player's past game results.

### <Changing Unit>

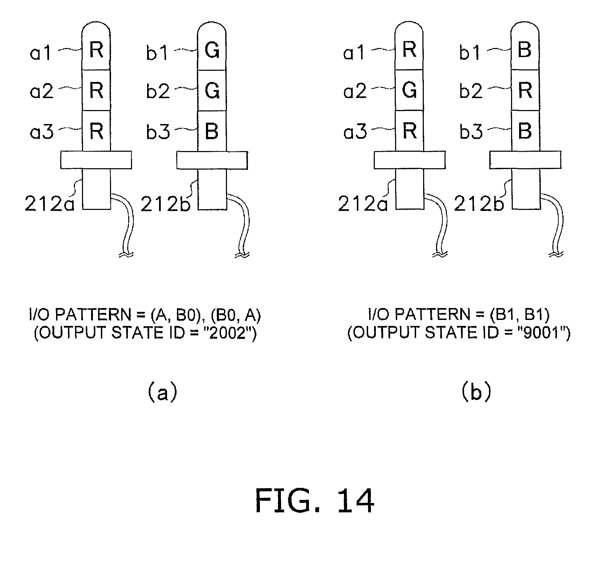

**FIGs. 14(a)**, **(b)** are schematic diagrams that show an aspect wherein the output states of the operation bars **212a, 212b** are set.

The changing unit **325** sets the operation sequence data and the I/O level based on the game difficulty level that was set. For example, if a game difficulty level of "25" is set, then, based on **FIG. 9****,** the changing unit **325** sets the operation sequence ID to "0005" and the I/O level to "2." The operation sequence data shown in **FIG. 8****,** for example, are for the case wherein the operation sequence ID is "0005."

Next, the changing unit **325** extracts the I/O pattern that corresponds to the set I/O level and randomly extracts an output state ID from among the output state IDs that correspond to the extracted I/O pattern. In the present embodiment, a plurality of output states is set for each I/O pattern, and consequently one output state ID is randomly selected from that plurality of output states. Furthermore, because one output state is randomly selected from the plurality of output states set for the same I/O level, the I/O level remains the same regardless of which output state is selected. In addition, the changing unit **325** may perform control such that there is no bias in the selection of the output state.

The changing unit **325** sets the operation bars **212** based on the randomly selected output states. For example, according to **FIG. 10****,** the I/O patterns that correspond to the I/O level "2" discussed above are (*A*, *B0*) and (*B0*, *A*). As the output states to be set in the operation bars **212,** the changing unit **325** randomly sets output state IDs from among the output state IDs (refer to **FIG. 11****)** that correspond to the I/O patterns *(A*, *B0*) and (*B0*, *A*). Here, for example, let us assume that "2002" is set as one of the output state IDs. In this case, the changing unit **325** would set the output states of the operation bars **212** such that (*a1*, *a2*, *a3*), (*b1*, *b2*, *b3*) *=* (*R*, *R*, *R*), (*G*, *G*, *B*), as shown in **FIG. 14(a)****.**

As another example, if a game difficulty level of "29" were set, then, based on **FIG. 9****,** the changing unit **325** would set the operation sequence ID to "0005" and the I/O level to "6." The changing unit **325** would set, based on **FIG. 10** and **FIG. 11****,** the I/O pattern to (*B1*, *B1*) and set one of the output state IDs corresponding thereto to, for example, "9001." Based on the set output state ID "9001," the changing unit **325** would set the output states of the operation bars **212** such that (*a1*, *a2*, *a3*), (*b1*, *b2*, *b3*) = (*R*, *G*, *R*), (*B*, *R*, *B*), as shown in **FIG. 14(b)****.**

As discussed above, the operation sequence ID of "0005" is the same both when the game difficulty level is "25" and when the game difficulty level is "29," but the I/O levels are different, namely, one is "2" and the other is "6." Thus, even though the operation sequence data are the same, the game difficulty level can be changed by changing the I/O level.

In addition, the changing unit **325** outputs the set operation sequence ID to the operation instructing unit **323** and the determining unit **324.**

### <Operation Instructing Unit>

The operation instructing unit **323** receives the operation sequence ID, for example, "0005," from the changing unit **325.** The operation instructing unit **323** outputs-based on the operation sequence data (for the operation sequence ID "0005") shown in **FIG. 8** as discussed above-an operation instruction to the player via the monitor **206.** For example, the operation instructing unit **323** outputs the "*G*" operation instruction at times *t0-t2* and outputs the "*R*" operation instruction at times *t3-t6*.

### <Determining Unit>

In response to the operation instruction from the operation instructing unit **323,** the player performs an input operation by waving one of the operation bars **212.** The determining unit **324** receives the player's input operation and determines the player's operation result.

Here, the determining unit **324** receives the operation sequence ID, for example, "0005," from the changing unit **325.** The determining unit **324** determines the player's operation result based on: the operation sequence data (for the operation sequence ID "0005") shown in **FIG. 8** as discussed above; and the output pattern that is output to the operation bar **212** with which the player has performed an input operation. For example, based on the operation sequence data shown in **FIG. 8****,** the "*G*" operation instruction is output at times *t1-t2*. If, in response to this "*G*" operation instruction, the operation bar **212b** shown in **FIG. 14(a)** is waved, the determining unit **324** determines that the operation result is "correct." In other words, because the output pattern "*G*" is output to the output regions **b1, b2** of the operation bar **212b,** the input operation that coincides with the "*G*" operation instruction is performed. On the other hand, if, in response to the "*G*" operation instruction, the operation bar **212a** shown in **FIG. 14(a)** is waved, then the determining unit **324** determines that the operation result is "incorrect." In other words, since the "*G*" output pattern is not output to any of the output regions **a1-a3** of the operation bar **212a,** an input operation that coincides with the "*G*" operation instruction has not been performed.

The determining unit **324** may not only determine the correctness of the input operation, but may also determine, for example, the timing and the speed of the input operation in response to the operation instruction. For example, the interval between the initial outputting of the "*R*" operation instruction at time *t3* and the player's performance of the input operation may be measured, and the determination may be made based on that measurement result.

In addition, the determining unit **324** transmits the determination result to the game executing unit **321.**

### (4) Process Flow

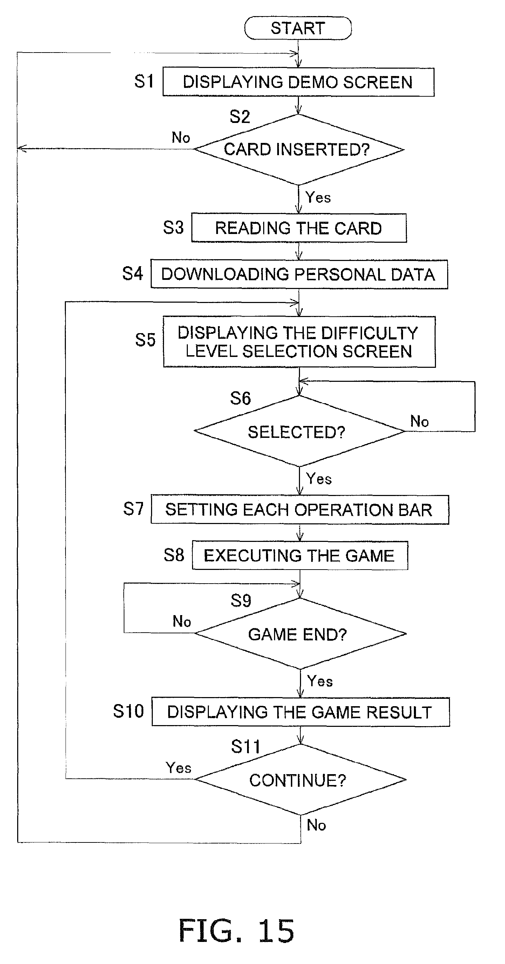

**FIG. 15** is a flow chart that shows one example of the flow of the process performed by the game terminal **200.** When the power supply of the game terminal **200** is turned ON, the following process starts.

Steps **S1-S2:** While displaying the demo screen, the CPU **201** stands by for the execution of a game (step **S1**). For example, when a coin is dropped in and the magnetic card is inserted into the card reader/writer **213** (step **S2**), the method transitions to step **S3.**

Step **S3:** The CPU **201** acquires the card ID that was read in by the card reader/writer **213.**

Step **S4:** The CPU **201** transmits the read-in card ID to the center server **100** and downloads the personal data that correspond to the card ID. The downloaded personal data contain authentication information. Subsequently, the CPU **201** requests the player to input authentication information, such as a password. The CPU **201** compares the inputted authentication information with the authentication information that is contained in the personal data and thereby confirms whether the player is actually the player associated with the card ID.

Steps **S5-S6:** The CPU **201** displays the difficulty level selection screen on the monitor **206** and accepts the selection of one of the difficulty levels.

Step **S7:** The CPU **201** determines which operation sequence data correspond to the difficulty level and sets the output states of the operation bars **212.**

Steps **S8-S9:** The CPU **201** outputs, based on the operation sequence data that correspond to the game difficulty level, an operation instruction on the monitor **206.** In addition, the CPU **201** accepts the input operation of the player and determines the operation result. The CPU **201** calculates a game result in accordance with the determination result. The CPU **201** executes the game until the game ends.

Step **S10:** When the game ends, the CPU **201** displays the game result on the monitor **206.**

Step **S11:** The CPU **201** asks the player whether he or she wishes to continue the game; if the game is continued, then the method returns to step **S5** and once again accepts the selection of a difficulty level. If the game is not continued, then the method returns to step **S1** and displays the demo screen.

In the abovementioned process, a game difficulty level is accepted for each game, and the output state in each of the output regions **300a-300c** of the operation bars **212** is changed every game; consequently, the player can respond to the operation instruction while noting the change in the output states.

Thus, the difficulty of the input operation, and in turn the difficulty level of the game, is controlled by changing the output states of the operation bars **212.** According to the present invention, the game difficulty level can be controlled without changing the operation sequence data, which constitute a program; thereby the time needed to change the program as well as the burden on the program creator to do so can be reduced. In other words, in the present embodiment, as shown in **FIG. 9****,** multiple I/O levels, each having a different difficulty level, are set for each set of operation sequence data. Accordingly, the game difficulty level can be changed by changing the I/O level without changing the operation sequence data. In addition, the game difficulty level can be controlled not only by the program but also by changing the output states of the operation bars **212;** consequently, the number of variations available for setting the game difficulty level can be increased. In addition, because the output states of the operation bars **212** directly operated by the player can be changed, the player can be presented with new attractions that are otherwise unobtainable by changing the program. For example, if the output states of the operation bars **212** were to be changed, then it would be pointless to memorize the relationships between the output states and each of the output regions **300** of the operation bars **212.** Consequently, it is possible to introduce new interest to the game, such as testing the player's reflexes rather than the player's memory.

### (5) Modified Examples

The following text explains various modified examples of the abovementioned embodiment.

### (5-1) Modified Example 1

In the abovementioned embodiment, the output states of the operation bars **212** are changed for each game in accordance with the game difficulty level. The following modified example 1 explains a case wherein the output states of the operation bars **212** are changed during a game. In modified example 1(a), the output states of the operation bars **212** alone are set in accordance with the game difficulty level, and a time interval, upon which every time it elapses the output states are changed, is set regardless of the game difficulty level. In addition, in modified example 1(b), both the output states of the operation bars **212** and the time interval are set in accordance with the game difficulty level; furthermore, in modified example 1(c) a prescribed time interval alone is set in accordance with the game difficulty level, and the output states of the operation bars **212** are set regardless of the game difficulty level. The following text explains each of the modified examples 1(a)-(c).

### (a)

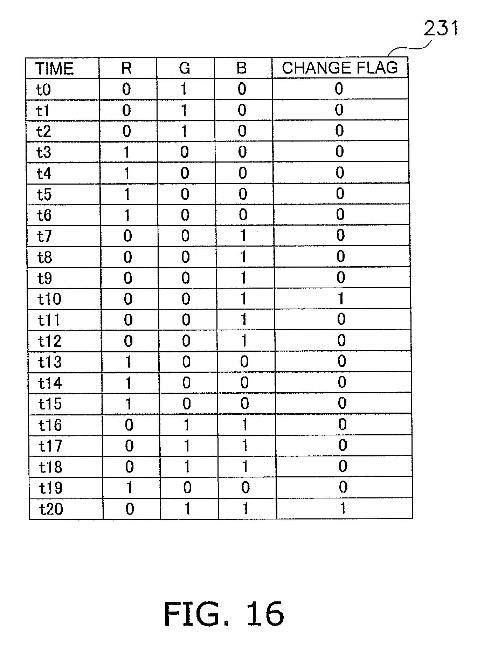

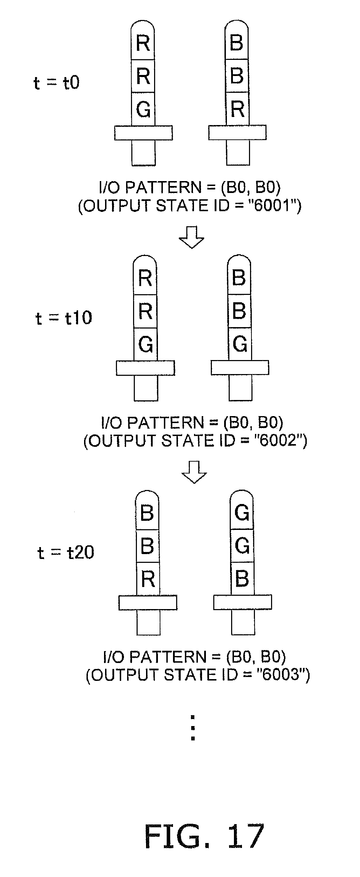

In modified example 1(a), the output states of the operation bars **212** are set in accordance with the game difficulty level and changed every time a prescribed time interval elapses during each game. **FIG. 16** shows the operation sequence data table wherein a change flag is set, and **FIG. 17** is an explanatory diagram that shows an aspect wherein the output states of the operation bars **212** are changed every time the prescribed time interval elapses.

The prescribed time interval is set irrespective of the game difficulty level and is set to, for example, 10 × Δ*t*. Here, let us assume that Δ*t* is the interval between times *t*(*n-*1)-*tn* (where *n* is a natural number greater than or equal to 0) of the operation sequence data in **FIG. 16** and is fixed.

For example, let us assume that the difficulty level setting unit **322** sets the game difficulty level to "10." Referencing **FIG. 9****,** the changing unit **325** would set the I/O level to "4" based on the game difficulty level of "10." Based on **FIG. 10****,** the I/O pattern for the I/O level "4" is (*B0*, *B0*). Here, the changing unit **325** would set the change flag to "1" every time the prescribed time interval 10 × Δ*t* elapses, as shown in **FIG. 16****.** A change flag of "1" indicates ON, and "0" indicates OFF. If the change flag transitions to "1," then the changing unit **325** would randomly select the output states-of the output states corresponding to the I/O pattern (*B0*, *B0*)-to be set in the operation bars **212.** Furthermore, the changing unit **325** would change the output states of the operation bars **212** to the selected output states. Thereby, as shown in **FIG. 17****,** the output states of the operation bars **212** are set to the output state ID "6001" (i.e., (*a1*, *a2*, *a3*), (*b1*, *b2*, *b3*) = (*R*, *R*, *G*), (*B*, *B*, *R*)) at, for example, times *t* = *t0-t10* and changed at times *t* = *t10*, *t20*....

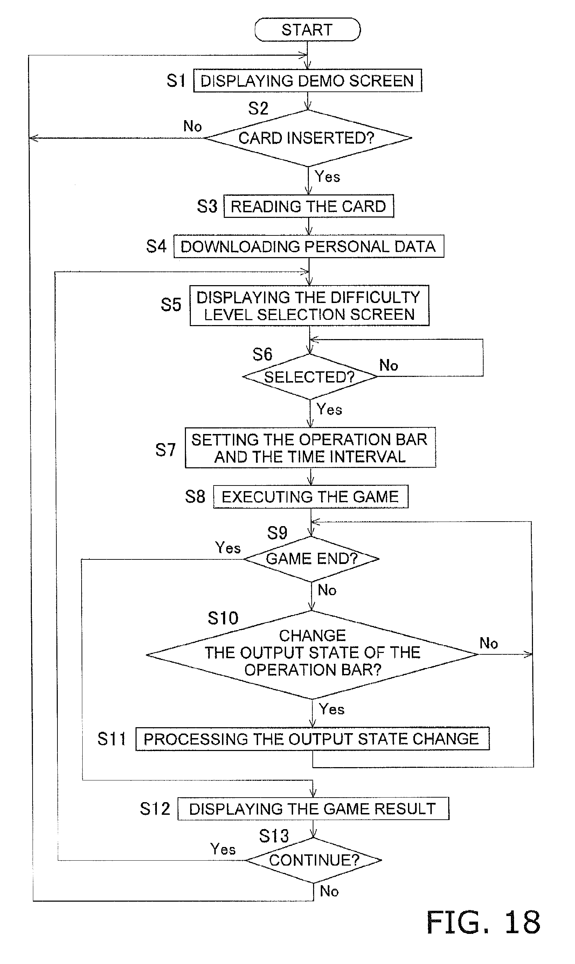

**FIG. 18** is a flow chart that shows one example of the flow of the process performed by the game terminal **200.** Steps **S1-S6** are the same as those in the flow chart in **FIG. 15** discussed above, and explanation thereof is therefore omitted.

Step **S7:** The CPU **201** sets the operation sequence data and the output states of the operation bars **212** in accordance with the difficulty level. The CPU **201** sets the operation sequence data every time the prescribed time interval elapses and sets the operation bars **212** to the selected output states.

Steps **S8-S9:** The CPU **201** outputs, based on the operation sequence data that correspond to the game difficulty level, the operation instruction to the monitor **206** and accepts the input operation of the player. In addition, the CPU **201** determines the operation result and calculates the game result. The CPU **201** determines the end of the game and executes the game until the game ends.

Steps **S10-S11:** The CPU **201** determines whether the prescribed time interval has elapsed since the output states of the operation bars **212** were last set. If the prescribed time interval has elapsed, then new output states will be set and the settings of the operation bars **212** will be changed. The steps that determine whether the prescribed time interval has elapsed and that change the output states are performed repetitively until the game ends.

Step **S12:** When the game ends, the CPU **201** displays the game result on the monitor **206.**

Step **S13:** The CPU **201** asks the player whether he or she wishes to continue the game; if the game is continued, the method returns to step **S5** and once again accepts the selection of a difficulty level. If the game is not continued, then the method returns to step **S1** and displays the demo screen.

Thus, in modified example 1(a), the output states of the operation bars **212** are changed in accordance with the game difficulty level every time the prescribed time interval elapses. Consequently, the player must operate the operation bars **212** in accordance with output states that are always new. In other words, if the output states of the operation bars **212** are changed every time the prescribed time interval elapses, then it is pointless to memorize the relationship between the operation bars **212** and the output states of those operation bars **212,** and therefore the game difficulty level increases. Based on the above, the game difficulty level can also be controlled by changing the output states of the operation bars **212** every time the prescribed time interval elapses.

### (b)

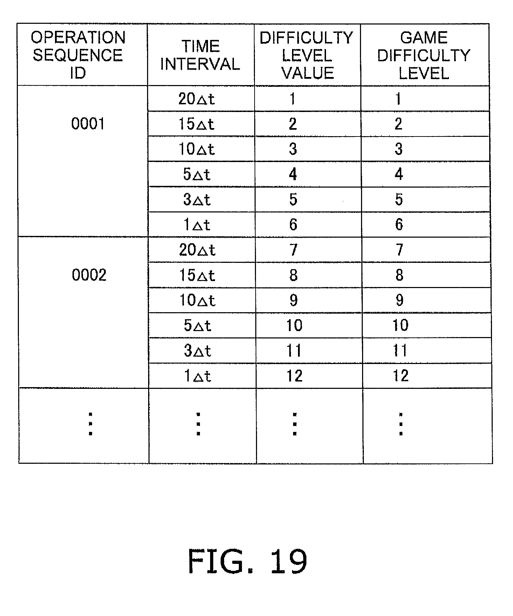

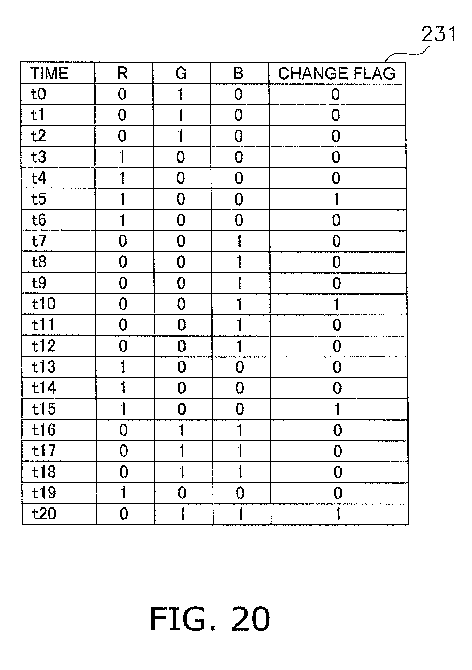

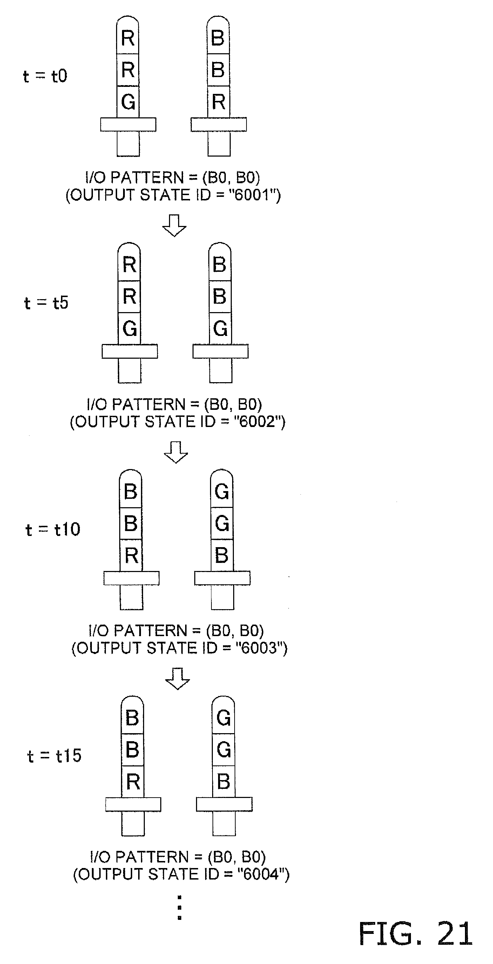

In the abovementioned modified example 1(a), the output states of the operation bars **212** are set in accordance with the game difficulty level and changed every time a prescribed time interval elapses during each game. In the modified example 1(b), however, the prescribed time interval is changed in accordance with the game difficulty level. Accordingly, in the modified example 1(b), the output states of the operation bars **212** and the prescribed time interval are both changed in accordance with the game difficulty level. **FIG. 19** is a correspondence table that indicates the correspondence between the operation sequence ID, the time interval, the difficulty level value, and the game difficulty level; **FIG. 20** is an operation sequence data table wherein the change flag is set; and **FIG. 21** is an explanatory diagram that shows an aspect wherein the output states of the operation bars **212** are changed using a time interval that accords with the game difficulty level.

As shown in **FIG. 19****,** in the present invention, a plurality of time intervals is set for one set of operation sequence data. A time interval-namely, one of six types including, for example, 20 × Δ*t*, 15 × Δ*t*, 10 × Δ*t*, 5 × Δ*t,* 3 × Δ*t*, and 1 × Δ*t*-is set for each game difficulty level.

For example, let us assume that the difficulty level setting unit **322** sets the game difficulty level to "10." Referencing **FIG. 19****,** the changing unit **325** would set, based on a game difficulty level of "10," the operation sequence ID to "0002," set the time interval to 5 × Δ*t*, and set the change flag. At this time, as shown in **FIG. 20****,** the change flag of the operation sequence data would be set to "1" every time the prescribed time interval of 5 × Δ*t* elapses. Furthermore, based on **FIG. 9** and **FIG. 10****,** the changing unit **325** would set the I/O level to "4" and the I/O pattern to (*B0*, *B0*). When the change flag transitioned to "1," the changing unit **325** would randomly set the output states to be set in the operation bars **212** from among the output states that correspond to the I/O pattern (*B0*, *B0*). Thereby, as shown in **FIG. 21****,** the output states of the operation bars **212** would change every time a time interval of 5 × Δ*t* elapsed.

Here, if the prescribed time interval were lengthened, then the period during which the output states of the operation bars **212** do not change would also lengthen. Accordingly, the player would get used to the input operation of the operation bars **212** and thereby the game difficulty level would decrease. However, if the prescribed time interval were shortened, the output states of the operation bars **212** would change continually. Accordingly, the player would have to operate the operation bars **212** in accordance with output states of an output pattern that would be continually new, and therefore the game difficulty level would increase. Based on the above, the game difficulty level can also be controlled by changing both the output states of the operation bars **212** and the time interval upon which every time it elapses the output states of the operation bars **212** are changed in accordance with the game difficulty level.

### (c)

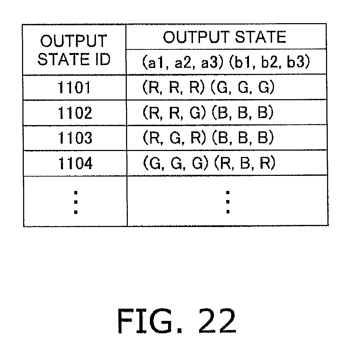

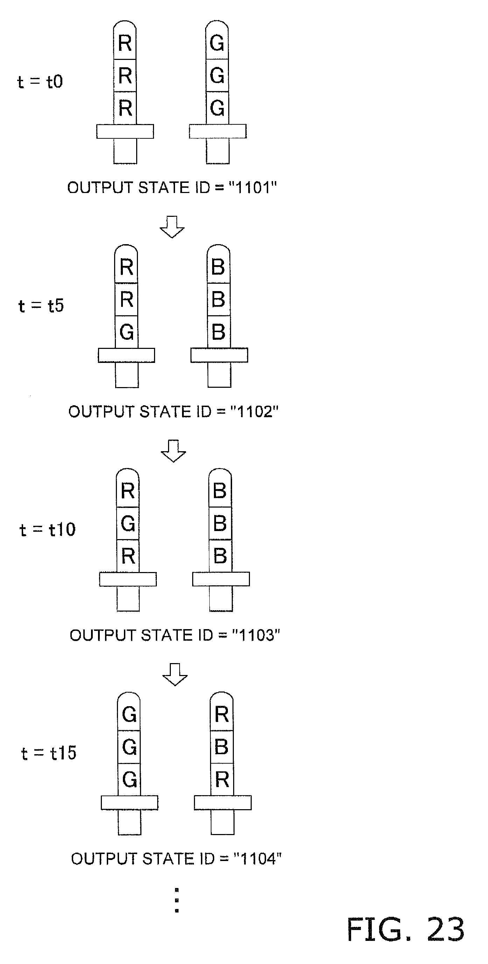

In the modified example 1(c), the output states of the operation bars **212** are changed in accordance with the game difficulty level every time a prescribed time interval elapses. At this time, the prescribed time interval alone is set in accordance with the game difficulty level and the output states of the operation bars **212** are set irrespective of the game difficulty level. **FIG. 22** shows an output state table of the operation bars **212,** which is stored in the ROM **103,** and **FIG. 23** is an explanatory diagram that shows an aspect wherein the output states of the operation bars **212** are changed using a time interval that is in accordance with the game difficulty level.

Similar to **FIG. 19****,** multiple time intervals that accord with the game difficulty level are set for one set of operation sequence data. In addition, as shown in **FIG. 22****,** multiple output state tables of the operation bars **212** are stored, irrespective of the game difficulty level, in the ROM **103.** First, the changing unit **325** sets the time intervals. Next, the changing unit **325** randomly selects output states from **FIG. 22** and changes the setting of the output states of the operation bars **212** every time the set time interval elapses.

For example, let us assume that the difficulty level setting unit **322** sets the game difficulty level to "10." Referencing **FIG. 19****,** the changing unit **325** would set, based on the game difficulty level of "10," the operation sequence ID to "0002" and the time interval to 5 × Δ*t*. Based on this setting, the changing unit **325** would set the change flag to "1" at intervals of 5 × Δ*t*, as shown in **FIG. 20****.** If the change flag were to transition to "1," then the changing unit **325** would, for example, randomly select output states from the output state table in **FIG. 22****.** Furthermore, the changing unit **325** would set the operation bars **212** to the selected output states. For example, as shown in **FIG. 23****,** the output states of the operation bars **212** are set to the output state ID "1101" (i.e., (*a1*, *a2*, *a3*), (*b1*, *b2*, *b3*) = (*R*, *R*, *R*), (*G*, *G*, *G*)) at times *t = t0-t4*, and change at times *t* = *t5*, *t10*, *t15*....

Similar to the abovementioned modified example 1(b), if the prescribed time interval were lengthened, then the game difficulty level would decrease; in addition, if the prescribed time interval were shortened, the game difficulty level would increase. Based on the above, the game difficulty level can also be controlled by changing only the time interval upon which, every time it elapses, the output states of the operation bars **212** that accord with the game difficulty level are changed.

Furthermore, the time interval upon which, every time it elapses, the output states are changed does not have to be fixed during a game; for example, the time interval may change during a game such that it is 5 × Δ*t* at one time and 1 × Δ*t* at the next.

### (5-2) Modified Example 2

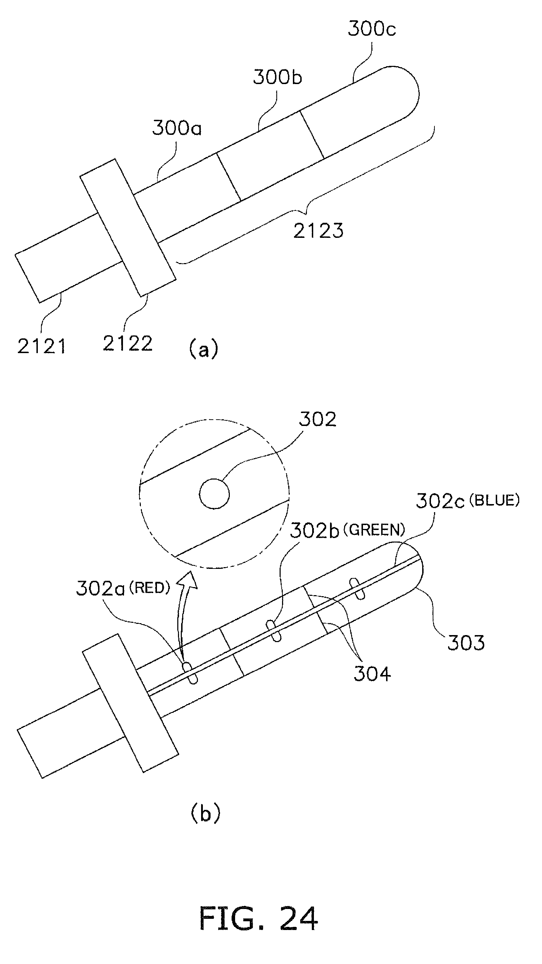

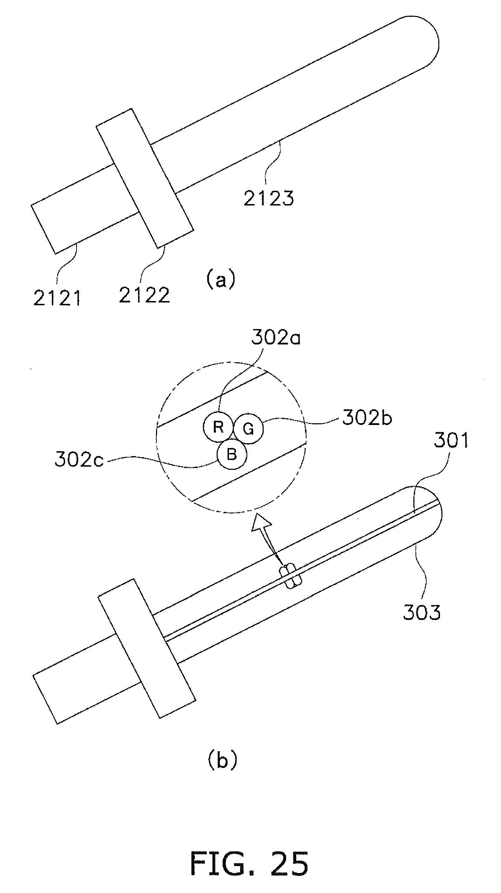

In the abovementioned embodiment, each of the output regions **300a-300c** of the operation bars **212** comprises three LEDs, each of which is one of three colors-namely, the LED **302a** (red), the **302b** (green), and the **303c** (blue)-and is configured such that it outputs one of the three output patterns, namely, "*R*," "*G*," or "*B*." However, the present invention also encompasses the operation bars **212** shown in **FIG. 24** and **FIG. 25****.** **FIG. 24(a)** is an external enlarged view of a modified example of one of the operation bars **212,** and **FIG. 24(b)** is an enlarged view that shows the interior of the light emitting part of the operation bar **212** in **FIG. 24(a)****.** **FIG. 25(a)** is an external enlarged view of another modified example of one of the operation bars **212,** and **FIG. 25(b)** is an enlarged view that shows the interior of the light emitting part of the operation bar **212** in **FIG. 25(a)****.** As shown in **FIGs. 24(a), (b),** the output region **300a** of the operation bar **212** outputs a red output pattern from the LED **302a** (red), the output region **300b** outputs a green output pattern from the LED **302b** (green), and the output region **300c** outputs a blue output pattern from the LED **302c** (blue). Thus, a configuration may be adopted wherein each of the output regions outputs only one output pattern. The difficulty level (i.e., I/O level) of the operation bar **212** is set by combining the ON and OFF states of the LEDs **302a-302c.**

In addition, as shown in **FIGs. 25(a), (b),** the operation bar **212** has only one output region **300.** The singular output region **300** comprises LEDs of three colors, namely, the LED **302a** (red), the **302b** (green), and the **303c** (blue) and is configured such that it outputs one of the three output patterns, namely, "*R*," "*G*," or "*B*."

### (5-3) Modified Example 3

In the abovementioned embodiment, the I/O levels (i.e., the difficulty levels) of the operating unit-in other words, the difficulty of operating the operating unit-is not limited to those defined in the I/O pattern table in **FIG. 10** and **FIG. 11****.** For example, if the rules of the game were to vary, so too would the definition of the I/O level.

Let us assume there are two rules: a first rule in which just one of the operation bars **212** that includes the output pattern designated by the operation instruction should be waved; and a second rule in which all operation bars **212** that include the output pattern designated by the operation instruction should be waved. In the case of the first rule, the greater the number of the operation bars **212** that include the output pattern designated by the operation instruction, the easier it becomes both to find the operation bars **212** to be operated and to operate any one of those operation bars **212.** However, in the case of the second rule, the greater the number of operation bars **212** that include the output pattern designated by the operation instruction, the greater the operation difficulty becomes. Accordingly, in a case wherein a plurality of the operation bars **212** has the same output pattern, a low I/O level is defined for the first rule and a high I/O level is defined for the second rule.

In addition, in the abovementioned embodiment, even if the output states of the operation bars **212a, 212b** are switched as shown in **FIG. 11****,** the difficulty levels of the operation bars **212** are defined such that they do not change; that said, they may be defined such that they do change.

In addition, the operation sequence data of the present embodiment shown in **FIG. 8** are set such that only one flag of the "*R*," "*G*," and "*B*" flags is "1," but two or three of the flags may be set to "1" simultaneously.

### (5-4) Modified Example 4

The present invention encompasses both a program for executing the method discussed above on a computer and a computer readable storage medium whereon such a program is recorded. Here, the program may be downloadable. Examples of storage media include a computer readable/writable flexible disk, a hard disk, semiconductor memory, a CD-ROM, a DVD, and a magneto-optic (MO) disk.

### INDUSTRIAL APPLICABILITY

The game apparatus, the gaming method, and the game program according to the present invention are applicable to any game that outputs an operation instruction to a player using operation sequence data.

## Claims

1. A game apparatus executing a game with a difficulty level, comprising:
an operation instructing unit configured to output an operation instruction to a player;
an operating unit configured to provide with one or a plurality of output regions, and accept an input operation from the player;
an outputting unit configured to be provided to the operating unit so as to correspond to each of the output regions, and output one output pattern or any one of a plurality of output patterns to the corresponding output region;
a changing unit configured to be provided to the operating unit, and change the output state of the output pattern output by at least one outputting unit in accordance with the game difficulty level;
a determining unit configured to determine an operation result based on the operation instruction and the output pattern, the output pattern being output to the output region of the operating unit having accepted the player's input; and
a game executing unit configured to control the execution of the game based on the determination result of the determining unit.

2. A game apparatus according to claim 2, wherein
the output pattern is at least one pattern selected from a plurality of patterns of color, design, character, symbol, and any combination thereof.

3. A game apparatus according to claim 1 or claim 2, wherein
the changing unit, in accordance with the game difficulty level, changes the number of types of output patterns output to the outputting unit.

4. A game apparatus according to any one claim of claims 1 to 3, wherein
the changing unit controls a time interval for changing the output state of the output pattern in accordance with the game difficulty level.

5. A game apparatus according to any one claim of claims 1 to 4, wherein
a plurality of the outputting unit is provided to the operating unit; each of the outputting unit having a plurality of light emitting unit with different luminous colors; and
the changing unit changes either the luminous colors or the ON/OFF states of the light emitting unit.

6. A gaming method executing a game with a difficulty level, comprising the steps of:
outputting an operation instruction to a player;
accepting an operation from the player via an operating unit, the operating unit being provided with one or a plurality of output regions;
outputting one output pattern or any one of a plurality of output patterns to each output region;
changing the output state of the output pattern in at least one output region in accordance with the game difficulty level;
determining an operation result based on the operation instruction and the output pattern, the output pattern being output to the output region of the operating unit having accepted the player's input; and
controlling the execution of the game based on the determination result.

7. A game program executed by a computer, the computer performing a game with a difficulty level, causing the computer to function as:
an operation instructing unit configured to output an operation instruction to a player;
an operating unit configured to be provided with one or a plurality of output regions, and accept an input operation from the player;
an outputting unit configured to be provided to the operating unit so as to correspond to each of the output regions, and output one output pattern or any one of a plurality of output patterns to the corresponding output region;
a changing unit configured to be provided to the operating unit, and change the output state of the output pattern output by at least one outputting unit in accordance with the game difficulty level;
a determining unit configured to determine an operation result based on the operation instruction and the output pattern, the output pattern being output to the output region of the operating unit having accepted the player's input; and
a game executing unit configured to control the execution of the game based on the determination result of the determining unit.
